# EUROPEAN PATENT APPLICATION

(11) **EP 1 895 276 A1**
(43) Date of publication of application: **05.03.2008**
(21) Application number: 07253352.4
(22) Date of filing: 24.08.2007
(51) Int. Cl.: G01C 22/00

(54) **Pedometer**

(30) Priority: 29.08.2006 JP 2006232185
(71) Applicant: Seiko Instruments Inc., Chiba-shi, Chiba (JP)
(72) Inventor: Tsubata, Keisuke, Chiba-shi, Chiba (JP)
(74) Representative: Cloughley, Peter Andrew

(57) **Abstract**

A pedometer which can perform a step counting more correctly by suppressing element-based variations and individual difference effects is provided.

An acceleration sensor outputs a walk signal having a charge corresponding to a walk. The walk signal is converted by charge-voltage conversion means into a voltage walk signal, removed of noise by filter means, amplified by amplification means and converted by binarization means into a digital signal, followed by being inputted to a CPU. The CPU performs open-close control of switches, such that the walking pitch, calculated based on the walk signal, comes within a predetermined walking pitch range stored in the storage means thereby controlling the gain of the amplification means and controlling the walk detection sensitivity properly.

## Description

The present invention relates to a pedometer that detects walking and takes count of walk steps.

Conventionally, development has been made for a pedometer for taking walk steps of a user by being used in the state worn on the body, such as the wrist or the waist, of the user or put in a bag the user carries. Devising is made variously for the pedometer in order to correctly take count of steps while suppressing the effects of body movement noises, etc.

In the pedometer described in Patent document 1 described below for example, the user is notified with a predetermined period by notification means such as sound. Walk determination adjusting means is configured to adjust a determination criterion at the walk determining means so that a walk signal detected can be in synchronism with the notification period of the notification means. By properly adjusting at least one of a detection level at the walk determining means and a mask period, the walk determination adjusting means is allowed to determine an adjustment completion when detecting a walk signal synchronous with the notification period. This makes it possible to suppress the effect of body movement noises, etc. thus enabling to take count of steps more correctly.

However, with the above pedometer, in the case the notification period is not matched to the walk period the user is accustomed to, the user is obliged to walk in a different way from his/her usual walking, thus problematically raising an unsuited feeling.

Assuming that the user who usually walks slowly adjusts faster in period (walking pitch) than the usual, the user would walk faster intentionally. Faster walking comparatively intensifies arm swing, in which state the sensitivity is adjusted. After completing the adjustment, when he/she walks slowly as usual, the sensitivity in turn becomes insufficient thus possibly disabling a correct detection.

Meanwhile, variations occur in the sensitivity due to the variations between constituent elements, such as a sensor and a circuit system (filter, amplification), constituting a walk detector. Furthermore, because of the individual difference of walk pattern from user to user, sensitivities are required variously in detecting a walk.

Therefore, there is a need to adjust the walk detector section in a manner absorbing the foregoing variations and individual difference.

Patent Document 1: JP-A-2005-283339 (paragraphs [0025] - [0045], Figs. 1 and 2)

The present invention aims at providing a pedometer capable of taking count of steps while suppressing the element-based variations and individual difference effect.

According to the present invention, there is provided a pedometer comprising: walk detecting means that detects a walk and outputs a corresponding walk signal; calculating means that calculates a step count and a walking pitch depending upon the walk signal; and control means that controls a detection sensitivity of the walk detecting means such that a calculated walk pitch comes within a predetermined range depending upon the walk signal.

The walk detecting means is to detect a walk and output a corresponding walk signal. The calculating means is to calculate a step count and a walking pitch depending upon the walk signal. The control means is to control the detection sensitivity of the walk detecting means such that a calculated walk pitch comes within a predetermined range.

Here, the walk detecting means may have a sensor that detects a walk and outputs a corresponding walk signal and amplification means that amplifies the walk signal from the sensor and outputs same as a walk signal, the control means controlling a gain of the amplification means such that a walking pitch calculated by the calculating means comes within a predetermined range depending upon the walk signal from the amplification means.

Meanwhile, the amplification means may have a resistance circuit having a plurality of resistances for determining a gain and switch means for controlling a resistance value of the resistance circuit, the control means controlling the gain of the amplification means by controlling the resistance value of the resistance circuit through performing open-close control of the switch means.

Meanwhile, the walk detecting means may have a sensor that detects a walk and outputs a corresponding charge walk signal and charge-voltage converting means that converts the walk signal from the sensor into a corresponding voltage walk signal to output, the control means controlling a gain of the charge-voltage converting means such that the walking pitch, calculated by the calculating means depending upon the walk signal from the charge-voltage converting means, comes within a predetermined range.

Meanwhile, the charge-voltage converting means may have a capacitor circuit having a plurality of capacitors for determining a gain and switch means for controlling a capacitance value of the capacitance circuit, the control means controlling the gain of the charge-voltage converting means by controlling the capacitance value of the capacitor circuit through performing open-close control of the switch means.

Meanwhile, there may be comprised of storage means, the control means storing an open/close status of the open-close controlled switch means in the storage means and controlling, at a start of step counting, switch means to the open/close status stored in the storage means.

Meanwhile, the storage means may store a predetermined walking pitch range, the control means controlling the amplification means or the gain of the charge-voltage converting means such that the walking pitch, calculated by the calculating means, comes within the walking pitch range stored in the storage means.

· Meanwhile, the predetermined walking pitch range may be set with an upper limit value smaller than twice of a lower limit value.

According to the pedometer of the invention, more correct step counting is possible to perform while suppressing element-based variations and individual difference effect.

Meanwhile, because the walking pitch upon sensitivity adjustment is not structurally regulated at a particular one type of value, adjustment can be in the usual walking state of the user, thus providing an effect not to give an unsuited feeling to the user.

Meanwhile, because adjustment can be under the condition well matched to the usual walking, there is obtained an effect that detection sensitivity improves in the actual walk detection.

Embodiments of the present invention will now be described by way of further example only and with reference to the accompanying drawings, in which:
Fig. 1 is a block diagram of a pedometer according to a first embodiment of the present invention.
Fig. 2 is a flowchart showing the process for the pedometer according to the first embodiment of the invention.
Fig. 3 is a timing chart of the pedometer according to the first embodiment of the invention.
Fig. 4 is a block diagram of a pedometer according to a second embodiment of the invention.

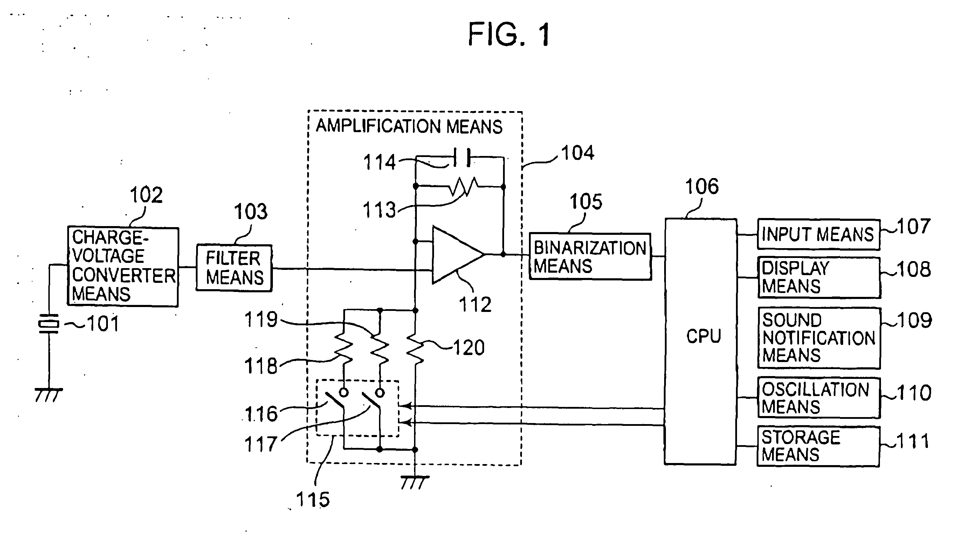

Fig. 1 is a block diagram of a pedometer according to a first embodiment of the present invention, illustrating an example of a pedometer structured to be used by being carried in a state worn on the wrist or waist or accommodated in a bag or the like.

In Fig. 1, the pedometer has an acceleration sensor 101 that detects a walk (including a run) of the user and outputs a charge signal (walk signal) corresponding to the walk, charge-voltage converting means 102 that converts the charge walk signal from the acceleration sensor 101 into the corresponding voltage walk signal to output, filter means 103 that outputs a walk signal removed of noise from the output signal from the charge-voltage converting means 102, amplification means 104 that amplifies and outputs the walk signal from the filter means 103, and binarization means 105 that waveform-shapes the walk signal from the amplification means 104 and outputs a walk signal in the form of a binary digital signal. Incidentally, the acceleration sensor 101 is a device that generates a charge commensurate with acceleration.

Meanwhile, the pedometer has a central processor unit (CPU) 106 that calculates a step count per predetermined time (walking pitch) and a step count depending upon the walk signal from the binarization means 105 and controls the gain of the amplification means 104, input means 107 structured by an input switch or the like, display means 108 that is structured by a liquid-crystal display device for displaying a step count, etc., sound notification means 109 that is structured by a piezoelectric speaker or the like for notifying a setting completion, an abnormality or the like by sound, oscillation means 110 that generates a reference clock signal, and storage means 111 structured by a non-volatile memory such as a flash memory.

The amplification means 104 has an operation amplifier 112, resistances 113, 120, gain-control resistances 118, 119, a capacitor 114 and gain-control switch means 115. The switch means 115 has a plurality of gain-control switches 116, 117 connected parallel with the resistance 120. The switches 116, 117 are connected in series with the gain-control resistances 118, 119, respectively. The switches 116, 117 may be mechanical switches or semiconductor switches.

The storage means 111 stores a program for the CPU 106 to execute, walking-pitch upper-limit and lower-limit values representative of a predetermined walking pitch range to be obtained in the usual walking, and open/close status of the switch means 115 (i.e. of the respective switches 116, 117) in the case the gain setting has been made for the amplification means 104. The predetermined walking pitch range is set such that the upper limit value of the range is smaller than twice the lower-limit value (e.g. lower-limit value: 80 steps/minute, upper-limit value: 135 steps/minute). Due to this, in the event such a situation occurs that a walk is not to be detected on each step, determination is made as detection abnormality.

Here, the sensor 101, the charge-voltage converting means 102, the filter means 103, the amplification means 104 and the binarization means 105 constitute walk detecting means that detects a walk and outputs a corresponding waking signal. The CPU 106 constitutes calculating means that calculates a walking pitch and a step count based on the walk signal from the binarization means 105, and control means that controls the detection sensitivity (specifically, the gain of the amplification means 104) of the walk detecting means such that the walking pitch, calculated based on the walk signal, comes within the predetermined pitch range. Meanwhile, the resistances 113, 118 - 120 constitute a resistance circuit.

Fig- 2 is a flowchart showing a process for the pedometer according tc the first embodiment of the invention, wherein shown is the process in which the CPU 106 executes the program stored in the storage means 111.

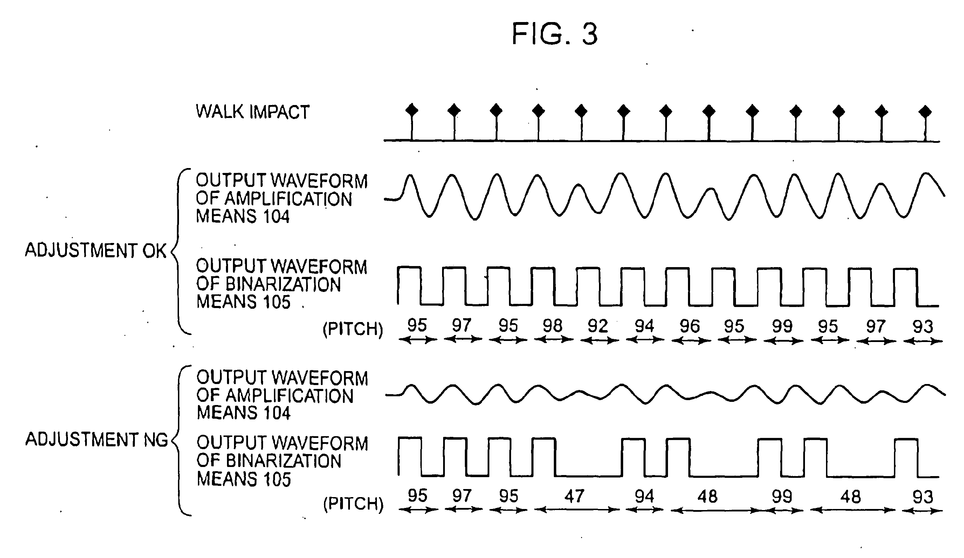

Meanwhile, Fig 3 is a timing chart in the first embodiment wherein there are depicted both of the timing chart where the gain of the amplification means 104 is properly adjusted/controlled (adjusted well) and the timing chart where the gain is not properly adjusted/controlled (adjusted not well) .

Each time a walk impact occurs in accordance with user's walking, the sensor 101 detects a walk and outputs a corresponding charge walk signal. The amplification means 104 amplifies the walk signal inputted through the charge-voltage converting means 102 and filter means 103 and outputs a walk signal in an analog form. The binarization means 105 converts the analog-form walk signal into a digital-form walk signal to output. The CPU 106 calculates a walking pitch depending upon a predetermined number of walk signals including the newest walk signal from the binarization means 105.

Where the amplification means 104 is gain-controlled properly, the CPU 106 can calculate a walking pitch corresponding to each walk signal (i.e. each walk impact) . In Fig. 3, the walking pitch calculated is 92 - 99 steps per minute under proper gain control. Where gain control is improper, the walking pitch is 47 steps per minute that is significantly smaller as compared to the pitch of the usual walking because of the possible non-detection of a walk signal corresponding to a walk impact. Accordingly, by setting the predetermined range of walking pitch at 80 - 135 steps per minute for example, determination can be made as to whether or not the gain of amplification means 104 has been controlled properly.

Now explanation is made on the operation of the pedometer according to the first embodiment by using Figs. 1 to 3.

At first, the user wears the pedometer on his/her wrist or the like and starts the operation thereof. At this time, the gain control information of the amplification means 104 and the like is not yet stored in the storage means, e.g. when used for the first time after purchase or when used by resetting the setting information, the CPU 106 displays an adjustment completion mark, indicating that adjustment/control is not yet completed, on the display means 108 (step S200).

In this state, the operation mode of the pedometer is set in an adjustment mode by user' s operation to the input means 107 (step S201) . In case walking is started (step S202), the acceleration sensor 101 outputs a charge signal (walk signal) corresponding to the walk each time detecting a walk (Fig. 3 walk impact) of the user.

The charge-voltage converting means 102 converts the charge walk signal from the sensor 101 into a corresponding voltage walk signal and outputs same. The filter means 103 outputs a walk signal removed of noise from the signal from the charge-voltage converting means 102.

Because the switches 116, 117 of the amplification means 104 are open in the initial state, the gain of the amplification means 104 is minimum in the initial state. The amplification means 104 amplifies the walk signal from the filter means 103 at the minimum gain and outputs same to the binarization means 105. Incidentally, the CPU 106, when controlling the gain of the amplification means 104, performs open-close control of the switches 116, 117 such that the gain of the amplification means 104 increases gradually from the minimum value. Namely, the CPU 106 performs control such that the gain of the amplification means 104 changes monotonously.

The binarization means 105 waveform-shapes the walk signal from the amplification means 104 and outputs a walk signal in a digital signal form.

The CPU 106 determines whether or not a walk signal is detected from the binarization means 105, i.e. whether or not a walk signal was inputted from the binarization means (step S203). When it is determined that a walk signal is not detected from the binarization means 105, it determines whether or not a predetermined time has passed, i.e. whether walk signals are continuously not detected for a predetermined time (i.e. predetermined steps) (step S204). When it is determined that a predetermined time has not passed, the switches 116, 117 are controlled to open and close thereby increasing the gain of the amplification means 104, followed by returning to the process step S203.

The CPU 106, when it is determined that a predetermined time has passed at the process step S204, causes the sound notification means 109 to notify a fact that sensitivity adjustment could not be properly made despite adjusting/controlling the gain of the amplification means 104 (step S206).

In case the user operates the input means 107 and designates re-adjustment execution (retry), the CPU 106 detects a retry command (step S207) and returns to the process step S200 where the foregoing process is repeated. The CPU 106, when it is determined that a retry command was not inputted from the input means 107 at the process step S207, terminates the sensitivity adjustment/control process.

Meanwhile, the CPU 106, when it is determined that a walk signal is detected from the binarization means 105 at the process step S203, calculates a pitch corresponding to the walk signal depending upon a predetermined number of walk signals including the foregoing walk signal and determines whether or not the calculated pitch is within a predetermined pitch range stored in the storage means 111 (step 5208).

When it is determined that a predetermined time has passed (i.e. walk signals have been detected continuously for a predetermined time (predetermined number of steps) after it is determined that the calculated pitch is within the predetermined pitch range (step S209), the CPU 106 causes the sound notification means 109 to notify a fact that sensitivity adjustment was normally completed (OK notification) (step S210).

Then, the CPU 106 puts off the adjustment non-completion mark displayed on the display means 108 (step s211) and then terminates the process by storing, in the storage means 111, the information about the open-close set status of the switch means 115 (open-close set status on the switches 116, 117) controlled to open and close for the gain adjustment (step S212). Because the storage means 111 is configured by a non-volatile memory, the stored information is held without erasure even if powered off.

In the case that power is booted up to start a step counting again or so after once terminating a step counting, the CPU 106 performs open-close control of the switch means 115 (specifically, switches 116, 117) in a manner assuming the open/close status as stored in the storage means 111 and makes the gain of the amplification means 104 to a proper value, thereafter starting a step counting.

When it is determined that the calculated pitch is out of the predetermined pitch range at the process step S208, the CPU 106 performs open-close control of the switch means 115 (specifically, switches 116, 117) to thereby change the gain of the amplification means 104 (in this case, the switches 116, 117 are controlled to open and close in a manner the gain increases) . Returning to the step S203, the foregoing process is repeated (step S213).

After adjusting the detection sensitivity of the walk detecting means, the input means 107 is operated to enter a step counting mode, thus starting a step counting.

As described so far, according to the pedometer of the first embodiment, constituent element variation and individual-based effect are suppressed to enable a step counting more correctly.

Meanwhile, the walking pitch upon adjustment is not regulated. This enables an adjustment in the usual walking state of the user, thus providing an effect not to give an unsuited feeling to the user.

Meanwhile, because adjustment is possible under the condition well matched to the usual walking, there is exhibited an effect that detection accuracy improves in the actual detection of walking.

Because the detection sensitivity of the walk detecting means is controlled to bring the walking pitch, calculated based on the walk signal, in a predetermined range by switching the gain of the amplification means 104, there is also provided an effect of excellence in noise resistance.

Incidentally, although the sensor 101 used the acceleration sensor in the first embodiment, it may use a sensor having a mechanical switch that the switch is opened and closed by vibration.

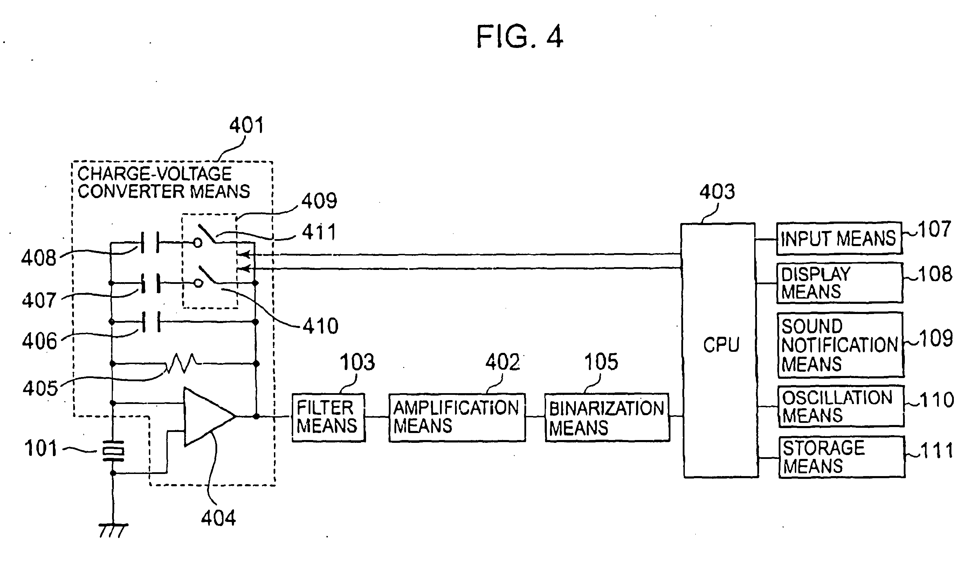

Fig. 4 is a block diagram of a pedometer according to a second embodiment of the invention, wherein like reference numeral is attached to like element of Fig. 1.

Although the first embodiment was arranged to adjust the gain of the amplification means 104 in order to adjust the sensitivity of the walk detecting means, the second embodiment is configured to adjust/control the gain of the charge-voltage converting means.

In Fig. 4, the pedometer has an acceleration sensor 101 that detects a walk (including a run) of the user and outputs a charge signal (walk signal) corresponding to the walk, charge-voltage converting means 401 that converts the charge walk signal from the acceleration sensor 101 into a corresponding voltage walk signal to output, filter means 103 that removes noise from the signal from the charge-voltage converting means 401 and outputs a walk signal, amplification means 402 that amplifies and outputs the walk signal from the filter means 103, and binarization means 105 that waveform-shapes the walk signal from the amplification means 402 in an analog form and outputs a walk signal in the form of a binary digital signal, a central processing unit (CPU) 403 that calculates a walking pitch and the number of walk steps depending upon the walk signal from the binarization means 105, input means 107, display means 103, sound notification means 109, oscillation means 110 and storage means 111.

The acceleration sensor 101 is a device that generates a charge commensurate with acceleration. When the acceleration sensor 101 generates a charge Q as to a certain acceleration, the capacitor having a capacitance C if received the output has a terminal-to-termanal voltage as represented by Q/C. Where the charge generated per unit acceleration varies in a certain range due to the variation of sensor performance of the acceleration sensor 101, the detection sensitivity of walk can be kept constant by adjusting in a certain range the capacitance of the capacitor circuit the charge is given.

In the case of adjustment to a detection sensitivity suited for the user, the detection sensitivity of a walk can be adjusted by adjusting the capacitance C of the capacitor circuit similarly to the foregoing. This is the basic principle of walk sensitivity adjustment in the second embodiment.

The charge-voltage converting means 401 has an operation amplifier 404, a resistance 405 connected between the input and the output of the operation amplifier 404, a capacitor 406 connected parallel with the resistance 405, a plurality of gain-control capacitors 407, 408 connected parallel with the capacitor 406, and switch means 409 having a plurality of switches 410, 411 connected in series with the capacitors 407, 408.

Here, the acceleration sensor 101, the charge-voltage converting means 401, the filter means 103, the amplification means 402 and the binarization means 105 constitute walk detecting means that detects a walk and outputs a corresponding walk signal. Meanwhile, the CPU 403 constitutes calculating means that calculates a walking pitch and step count based on the walk signal from the binarization means 105, and control means that controls the detection sensitivity (specifically, conversion gain of the charge-voltage converting means 401) of the walk detecting means such that the step count calculated based on the walk signal is within the predetermined pitch range.

The difference between the first and second embodiments lies in that the first embodiment used the charge-voltage converting means 102 having a gain fixed at a predetermined value and the amplification means 104 having a gain variable whereas the second embodiment uses charge-voltage converting means having a gain variable and amplification means 402 having a gain fixed at a predetermined value.

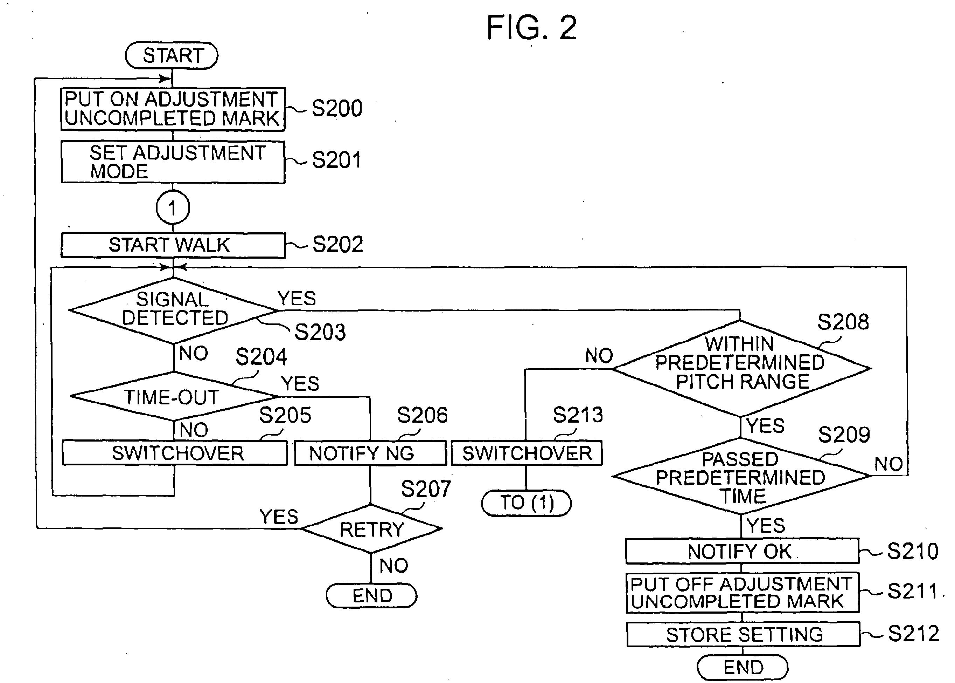

The configuration is identical in the other respects. Accordingly, the processing content and timing of the CPU 403 is similar to that of Figs. 2 and 3 excepting that the CPU 403 operates in a manner controlling the gain of the charge-voltage converting means 401.

Now explanation is made on the operation of the second embodiment with using Fig. 4 (while referring to Figs. 1 to 3, as required), as to the difference from the first embodiment.

When the user operates the input means 107 and starts a walk by the setting in the adjustment mode, the acceleration sensor 101 outputs a charge walk signal corresponding to the walk each time detecting a walk of the user (walk impact in Fig. 3).

The charge-voltage converting means 401 converts the walk signal from the acceleration sensor 101 into a corresponding voltage walk signal and outputs it. The switches 410, 411 of the charge-voltage converting means 401 are open in the initial state. Accordingly, the gain of the charge-voltage converting means 401 is minimum in the initial state. The charge-voltage converting means 401 amplifies at the minimum gain the walk signal from the acceleration sensor 101 and outputs same to the filter means 103.

Incidentally, the CPU 403, when controlling the gain of the charge-voltage converting means 401, performs open-close control of the switches 410, 411 such that the gain of the charge-voltage converting means 401 increases in order from the minimum value. Namely, the switches 410, 411 are controlled to open and close in a manner monotonously changing the gain of the charge-voltage converting means 401.

The filter means 103 outputs a walk signal removed of noise from the signal of from the charge-voltage converting means 401. The amplification means 402 amplifies at a predetermined gain the walk signal from the filter means 103 and outputs a walk signal in the form of an analog signal to the binarization means 105. The binarization means 105 waveform-shapes the analog walk signal from the amplification means 402 and outputs a walk signal in the form of a digital signal.

The CPU 403 performs a processing similarly to Fig. 2, thereby performing open-close control of the switch means 409 (specifically, switches 410, 411) such that the walk pitch, calculated based on the walk signal outputted from the binarization means 105, comes within a predetermined walking pitch range as stored in the storage means 111.

The CPU 106 terminates the gain adjustment when the calculated walk pitch comes within the predetermined walk pitch. In this case, the process is terminated by storing the information about the open-close setting status of the switch means 409 (specifically, switches 410, 411) . After adjusting the detection sensitivity of the walk detecting means, the input means 107 is operated to enter a step-counting mode thus starting a step counting.

When starting a step counting by powering on after once terminating a counting of steps or so, the switch means 409 is controlled to open and close into an open-close state as stored in the storage means 111 thereby bringing the gain of the charge-voltage converting means 401 to a proper value. Then, step counting is started.

As described so far, similarly to the first embodiment, the second embodiment provides an effect that more correct counting of steps is enabled while suppressing the element-based variations and individual difference effects. Besides, because the capacitors are switched over, fine adjustment of gain is available by using a plurality of capacitors small in capacitance value. Thus, there is also an effect that fine adjustment of sensitivity is possible to perform.

Application is possible to various types of pedometers including a pedometer in a scheme to be used worn on the wrist, a pedometer in a scheme to be used worn on the waist, and a pedometer in a scheme to be used carrying in a bag or the like.

The aforegoing description has been given by way of example only and it will be appreciated by a person skilled in the art that modifications can be made without departing from the scope of the present invention.

## Claims

1. A pedometer comprising:
walk detecting means that detects a walk and outputs a corresponding walk signal;
calculating means that calculates a step count and a walking pitch depending upon the walk signal; and
control means that controls a detection sensitivity of the walk detecting means such that a calculated walk pitch comes within a predetermined range depending upon the walk signal.

2. A pedometer according to claim 1, wherein the walk detecting means has a sensor that detects a walk and outputs a corresponding walk signal and amplification means that amplifies the walk signal from the sensor and outputs same as a walk signal,
the control means controlling a gain of the amplification means such that a walking pitch calculated by the calculating means comes within a predetermined range depending upon the walk signal from the amplification means.

3. A pedometer according to claim 2, wherein the amplification means has a resistance circuit having a plurality of resistances for determining a gain and switch means for controlling a resistance value of the resistance circuit,
the control means controlling the gain of the amplification means by controlling the resistance value of the resistance circuit through performing open-close control of the switch means.

4. A pedometer according to claim 1, wherein the walk detecting means has a sensor that detects a walk and outputs a corresponding charge walk signal and charge-voltage converting means that converts the walk signal from the sensor into a corresponding voltage walk signal to output,
the control means controlling a gain of the charge-voltage converting means such that the walking pitch, calculated by the calculating means depending upon the walk signal from the charge-voltage converting means, comes within a predetermined range.

5. A pedometer according to claim 4, wherein the charge-voltage converting means has a capacitor circuit having a plurality of capacitors for determining a gain and switch means for controlling a capacitance value of the capacitance circuit,
the control means controlling the gain of the charge-voltage converting means by controlling the capacitance value of the capacitor circuit through performing open-close control of the switch means.

6. A pedometer according to claim 3 or 5, comprising storage means,
the control means storing an open/close status of the open-close controlled switch means in the storage means and controlling, at a start of step counting, switch means to the open/close status stored in the storage means.

7. A pedometer according to claim 6, wherein the storage means stores a predetermined walking pitch range, the control means controlling the amplification means or the gain of the charge-voltage converting means such that the walking pitch, calculated by the calculating means, comes within the walking pitch range stored in the storage means.

8. A pedometer according to claim 7, wherein the predetermined walking pitch range is set with an upper limit value smaller than twice of a lower limit value.
